# EUROPEAN PATENT APPLICATION

(11) **EP 3 760 602 A1**
(43) Date of publication of application: **06.01.2021**
(21) Application number: 19760342.6
(22) Date of filing: 25.02.2019
(51) Int. Cl.: C04B 35/10, B28B 1/30, B29C 64/153, B33Y 70/00, C04B 35/634

(54) **PARTICLE COMPOSITION**

(30) Priority: 28.02.2018 JP 2018035234
(71) Applicant: SUMITOMO CHEMICAL COMPANY LIMITED, Chuo-ku Tokyo 104-8260 (JP); Tokyo Institute of Technology, Tokyo 152-8550 (JP)
(72) Inventor: IKOMA, Toshiyuki, Tokyo 152-8550 (JP); HAMANO, Ryohei, Tokyo 152-8550 (JP); YOKOI, Satoshi, Tokyo 152-8550 (JP); AZUMA, Norifumi, Tokyo 104-8260 (JP); UOE, Kousuke, Ibaraki 300-3294 (JP)
(74) Representative: Vossius & Partner Patentanwälte Rechtsanwälte mbB
(86) International application number: PCT/JP2019/007117
(87) International publication number: WO 2019/167898

(57) **Abstract**

A particle composition according to the present invention contains: hydraulic alumina particles; and a water-absorbing polymer.

## Description

### Technical Field

The present invention relates to a particle composition.

### Background Art

From the related art, a method for manufacturing a molded body of ceramic particles having a desired shape by repeating forming a layer of ceramic particles and binding a part of the layer of the ceramic particles with a binder has been known. By sintering the molded body, a ceramic sintered body having a desired shape is obtained.

### Citation List

### Patent Literature

Patent Literature 1: Japanese Unexamined Patent Application Publication No. 2003-515465

### Summary of Invention

### Technical Problem

The present inventors have considered to use hydraulic alumina particles that are easily cured by the supply of water, as the ceramic particles.

However, a large amount of water is required in order to cure the hydraulic alumina particles, and thus, it may not be possible to prepare a molded body having a sufficient strength, in a 3D printer of the related art.

The present invention has been made in consideration of the circumstances described above, and an object thereof is to provide a particle composition that is capable of obtaining a molded body with a small amount of water.

### Solution to Problem

A particle composition according to the present invention contains: hydraulic alumina particles; and a water-absorbing polymer.

Here, a content of the hydraulic alumina particles may be 60 mass% or more.

In addition, a content of the water-absorbing polymer may be from 1 mass% to 40 mass%.

In addition, at least a part of the water-absorbing polymer may cover at least a part of a surface of the hydraulic alumina particles.

In addition, the particle composition can be for additive fabrication.

### Advantageous Effects of Invention

According to the present invention, it is possible to obtain a molded body with a small amount of water.

### Brief Description of Drawings

FIG. 1 is a SEM photograph of a particle composition of Example 1.
FIG. 2 is a diagram showing a particle size distribution of hydraulic alumina having a particle composition of each of Examples and Comparative Examples.

### Description of Embodiments

### (Particle Composition)

A particle composition according to an embodiment of the present invention contains: hydraulic alumina particles; and a water-absorbing polymer.

### (Hydraulic Alumina Particles)

Hydraulic alumina is transition alumina that is cured by being rehydrated in the case of being in contact with water, and is p-alumina. The hydraulic alumina can be cured by being in contact with water, in an environment of from 20°C to 100°C. The hydraulic alumina particles are capable of exhibiting hydraulicity even in the case of including other particles along with p-alumina particles. The hydraulic alumina particles can contain preferably 50 mass% or more, and more preferably 55 mass% or more of p-alumina, with respect to the total amount of hydraulic alumina particles, and the residue can be transition alumina other than p-alumina; amorphous alumina; alumina; aluminum hydroxide; silicon dioxide; titanium dioxide; and the like. χ-Alumina that is easily mixed on a manufacturing process of p-alumina does not cause serious problems even in the case of being mixed in large amounts. The hydraulic alumina particles can contain 80 mass% or more, 90 mass% or more, or 95 mass% or more of p-alumina and χ-alumina, and the residue can be transition alumina other than p-alumina and χ-alumina; amorphous alumina; alumina; aluminum hydroxide; silicon dioxide; titanium dioxide; and the like. The hydraulic alumina particles can contain 50 parts by mass or more, and more preferably 55 parts by mass or more of p-alumina when the total amount of p-alumina and χ-alumina is set to 100 parts by mass.

The hydraulic alumina particles are capable of having a calcium content of less than 0.05 mass% in terms of CaO.

A particle diameter of the hydraulic alumina particles is not particularly limited, and it is preferable that D50 is 5 to 30 µm. D50 is a 50% cumulative particle diameter from the smallest particle diameter in a particle size distribution. In addition, the particle size distribution is a volume-based particle size distribution according to a laser diffraction method. In a case where the particle diameter is small, the fluidity of the particle composition decreases, but a dimension accuracy of a molded body that is obtained tends to be improved. In a case where the particle diameter is large, a rehydration reaction tends to be difficult to occur.

D10 of the hydraulic alumina particles can be 1 to 10 µm.

D90 of the hydraulic alumina particles can be 10 to 60 µm.

The hydraulic alumina particles, for example, can be obtained by entraining gibbsite that is obtained by a Bayer process or the like into airflow at a gas temperature of 400 to 1200°C and a linear velocity of 5 to 50 m/s to be calcined for a contact time of approximately 0.1 to 10 s. For example, a detailed manufacture method of the hydraulic alumina particles is disclosed in Japanese Patent No. 3341594 and Japanese Patent No. 3704775.

### (Water-Absorbing Polymer)

The water-absorbing polymer that is used in the present invention is a polymer material having properties of absorbing water over a short period of time in the case of being in contact with water, and of turning into a gel. Examples of such a polymer material include starch, sodium alginate, gum arabic, gelatin, casein, dextrin, methyl cellulose, hydroxyethyl cellulose, carboxymethyl cellulose, cellulose sulfate, cyanoethyl cellulose, polyvinyl alcohol, an acrylic acid-polyvinyl alcohol copolymer, acetoacetylated polyvinyl alcohol, a vinyl acetate-methyl acrylate copolymer, polyvinyl methyl ether, sodium polyacrylate, a methyl vinyl ether-maleic anhydride copolymer, an ethylene-maleic anhydride copolymer, a styrene-maleic anhydride copolymer, sodium polystyrene sulfonate, polyvinyl sodium sulfonate, polyvinyl benzyl trimethyl ammonium chloride, polydiallyl dimethyl ammonium chloride, polydimethyl aminoethyl methacrylate hydrochloride, polyvinyl pyridine, polyvinyl imidazole, polyethylene imine, polyamide polyamine, polyacryl amide, polyethylene oxide, polyvinyl pyrrolidone, and the like, and preferably include a vinyl acetate-based copolymer such as a vinyl acetate-methyl acrylate copolymer and an ethylene-vinyl acetate copolymer.

Among these polymers, a polymer that is re-emulsified in the case of being mixed with water, and is capable of forming oil-in-water type emulsion is preferable. Examples of such a water-absorbing polymer include a vinyl acetate-based copolymer such as a vinyl acetate-methyl acrylate copolymer and an ethylene-vinyl acetate copolymer; an acryl copolymer such as an acrylic acid ester copolymer; and the like.

In the particle composition, the water-absorbing polymer may exist separately from the hydraulic alumina particles, and it is preferable that the water-absorbing polymer covers at least a part of the surface of the hydraulic alumina particles, in the form of a powder or a film.

In order to aggregate the hydraulic alumina particles, the particle composition can contain a hydraulic urethane resin such as an urethane dispersion; a re-emulsifiable rubber latex such as chloroprene rubber, a styrene-butadiene copolymer, an acrylonitrile-butadiene copolymer, and a methyl methacrylate-butadiene copolymer; or the like, in addition to the hydraulic alumina particles and the water-absorbing polymer.

### (Composition Ratio)

It is preferable that the content of the hydraulic alumina particles in the particle composition is 60 mass% or more.

It is preferable that the content of the water-absorbing polymer in the particle composition is 1 mass% or more, and it is more preferable that the content is 10 mass% or more. It is preferable that the content of the water-absorbing polymer in the particle composition is 40 mass% or less, and it is more preferable that the content is 30 mass% or less.

### (Manufacture Method of Particle Composition)

It is possible to obtain the particle composition by mixing the hydraulic alumina particles and the water-absorbing polymer by an arbitrary method.

In a dry state, the water-absorbing polymer is generally in the form of an aggregated powder. Therefore, it is preferable to mix the hydraulic alumina particles and the water-absorbing polymer while crushing and dispersing the aggregate of the water-absorbing polymer, from the viewpoint of efficiently covering the surface of the hydraulic alumina particles with the water-absorbing polymer.

A method of mixing while crushing is not particularly limited, and for example, can be implemented by supplying the hydraulic alumina particles and the water-absorbing polymer to a crusher such as an airflow type crusher (a jet mill) or a medium type crusher (a vibrational mill and a ball mill). In particular, in order to prevent chippings and the like from a medium from being mixed, it is preferable to use a jet mill.

### (Use Method of Particle Composition)

The particle composition described above is suitable for an additive fabrication application. Hereinafter, an additive fabrication method using the particle composition described above will be described.

### (Additive Fabrication Method)

First, a layer of the particle composition described above is formed on a base. The thickness of the layer is not limited, and for example, can be 30 to 200 µm. A formation method of the layer is not particularly limited, and a squeegee method or the like can be applied.

Next, water is prepared. Water is capable of containing additives such as an antifoaming agent such as an acetylene compound; a lubricant such as glycerin or diethylene glycol; and a surfactant. Next, water described above is supplied to a desired region of the layer of the particle composition. The supply of water can be performed in an environment of 20 to 50°C. A supply method is not particularly limited, and a known method such as an ink jet method can be applied. Accordingly, water is supplied only to a specific portion of the layer of the particle composition, and the particle composition is cured. It is considered that rehydrating a part of the hydraulic alumina particles in the specific portion and aggregating alumina-based particles by the water-absorbing polymer in contact with water contribute to the curing. The alumina-based particles are a mixture of the hydraulic alumina particles and the particles of the rehydrate thereof.

The amount of water can be 0.1 to 0.5 parts by volume by setting the volume of the portion to 1. The temperature of water to be supplied is not particularly limited, and is preferably 20 to 50°C.

Subsequently, the formation of the layer of the particle composition described above on the layer of the particle composition to which water was partially supplied as described above, and the supply of water are sequentially repeated. It takes approximately 10 minutes to 60 minutes until the curing is substantially completed after the water is supplied to the layer of the particle composition, and it is possible to form the next layer of the particle composition and to supply water, before the curing of each layer is completed.

Accordingly, only a specific portion in a laminated structure of a plurality of layers of the particle composition is cured. That is, in the laminated structure of the plurality of layers of the particle composition, the particles are bound, and a molded body of the alumina-based particles is formed, in a region to which water is supplied, whereas the hydraulic alumina particles are in a state of not being bound, in a region to which water is not supplied. Therefore, the hydraulic alumina particles that are not bound are removed from the laminated structure of the layers of the particle composition, and thus, a molded body having a three-dimensional shape in which the alumina-based particles are bound is obtained. In two adjacent layers of the particle composition, in a case where portions to which water is supplied are in contact with each other, the portions are also bound, and thus, a molded body having a height greater than the height of each layer is obtained.

Note that, a step of heating the alumina-based particles after water is supplied can be suitably added. A heating temperature, for example, can be 30°C to 100°C. The heating may be performed after water is supplied to the specific portion of the layer of the particle composition and before the next layer of the particle composition is laminated on the layer to which water is supplied, or the heating may be performed once collectively after the final layer of the particle composition is formed and water is supplied to the final layer of the particle composition.

The additive fabrication method described above can be implemented by using a commercially available 3D printer.

### (Molded Body for Sintering, obtained by Additive Fabrication)

A molded body for sintering according to an embodiment of the present invention can be manufactured by the additive fabrication method described above. The molded body contains the alumina-based particles (the hydraulic alumina particles and the particles of the rehydrate thereof) and the water-absorbing polymer, and the alumina-based particles are fixed to each other. It is preferable that the content of the alumina-based particles in the molded body for sintering is 60 mass% or more. It is preferable that the content of the water-absorbing polymer in the molded body for sintering is 1 mass% or more, and it is more preferable that the content is 10 mass% or more. It is preferable that the content of the water-absorbing polymer in the molded body for sintering is 40 weight% or less, and it is more preferable that the content is 30 mass% or less.

The rehydrate particles of hydraulic alumina in the molded body for sintering may contain 50 mass% or more, preferably 55 mass% or more of pseudo-boehmite, and can contain 80 mass% or more, 90 mass% or more, or 95 mass% or more of pseudo-boehmite and bayerite in total. The molded body for sintering can contain 50 parts by mass or more, more preferably 55 parts by mass or more of pseudo-boehmite when the total amount of pseudo-boehmite and bayerite is set to 100 parts by mass.

A mass ratio of the rehydrate particles to the alumina-based particles can be 5 to 45%.

The molded body for sintering may contain various additives in addition to the alumina-based particles and the water-absorbing polymer. For example, the molded body may contain an organic substance (for example, an aggregating agent) other than the water-absorbing polymer.

In addition, the molded body may contain additives such as an untifoaming agent such as an acetylene compound; a lubricant such as glycerin or diethylene glycol; and a surfactant.

The molded body can be in an arbitrary shape. For example, the molded body is in the shape of a plate, a column, a honeycomb, or the like.

### (Manufacturing Method of Alumina Sintered Body)

The molded body obtained by the additive fabrication described above is sintered. A sintering condition is not particularly limited, and it is preferable that the molded body is sintered at 1300 to 1800°C for approximately 1 to 100 hours, in an oxygen-containing atmosphere such as an air atmosphere. Accordingly, the water-absorbing polymer is eliminated, the alumina-based particles become α-alumina (Al₂O₃) particles, and the α-alumina particles are sintered, and thus, an α-alumina sintered body having a three-dimensional shape is obtained.

### (Action)

According to the particle composition of the embodiment described above, it is possible to obtain a molded body with a small amount of water. The reason thereof is not apparent, but it is considered that the following factors contribute to the effect described above.

The particle composition contains the water-absorbing polymer in addition to the hydraulic alumina particles. Therefore, it is considered that water applied to the particle composition can be efficiently supplied to hydraulic alumina. In addition, it is also considered that the water-absorbing polymer containing water has a function of aggregating the alumina-based particles.

In a case where the molded body is obtained with a small amount of water, the application of a commercially available ink jet powder lamination type (powder fixation type lamination method) 3D printer is facilitated.

### Examples

Hydraulic alumina particles and a water-absorbing polymer described below were prepared.

### (Hydraulic Alumina Particles)

Hydraulic alumina particles BK-540 (Average Particle Diameter D50: 32.83 µm), manufactured by Sumitomo Chemical Company, Limited, were prepared. The hydraulic alumina particles contained 60 mass% or more of p-alumina, contained 96 mass% or more of p-alumina and χ-alumina in total with respect to the whole particles, and had a calcium content of less than 0.02 mass% in terms of CaO.

### (Powder Containing Water-Absorbing Polymer)

An ethylene-vinyl acetate copolymerized resin powder RP-100S, manufactured by Sumika Chemtex Company, Limited, was prepared. The powder is mixed particles that contain 80 mass% or more of an ethylene-vinyl acetate copolymer resin that is a water-absorbing polymer, and 1 mass% or more of amorphous silica; and has an apparent density of 0.4 g/ml, an average particle diameter of 70 µm, and 2 mass% or less of the residue on a sieve of particle diameter 300 µm.

### (Example 1)

The hydraulic alumina particles and the powder containing water-absorbing polymer were simply mixed at a weight ratio of 7 : 3, and then, were supplied to a jet mill pulverizer (a horizontal jet mill pulverizer PJM-280SP, manufactured by Nippon Pneumatic Mfg. Co., Ltd.) at a supply velocity of 25 kg/hr, and was further mixed while being pulverized such that the surface of the hydraulic alumina particles was covered with the water-absorbing polymer, and thus, a particle composition was obtained. A gauge pressure of an air supply port at the time of pulverization was 0.3 MPa.

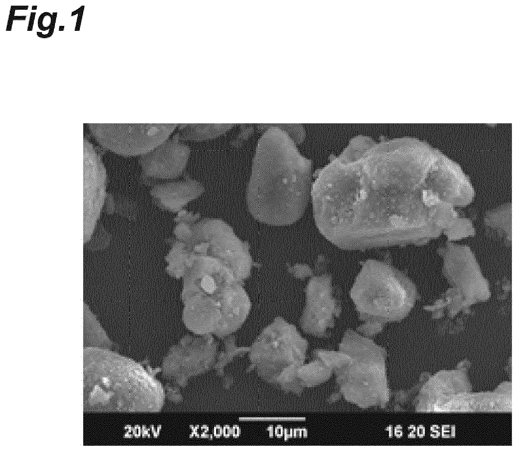

As a result of checking the particle composition with SEM, most of the water-absorbing polymer was attached to the surface of the hydraulic alumina particles, and covered the surface (refer to FIG. 1).

### (Example 2)

Example 2 was the same as Example 1 except that the hydraulic alumina particles and the powder containing water-absorbing polymer was mixed at a weight ratio of 9 : 1.

### (Comparative Example 1)

Comparative Example 1 was the same as Example 1 except that the powder containing water-absorbing polymer was not added, and the pulverization in the jet mill was not also performed.

### (Comparative Example 2)

Comparative Example 2 was the same as Example 1 except that the powder containing water-absorbing polymer was not added. That is, only the hydraulic alumina particles were pulverized by the jet mill.

### (Fluidity Evaluation of Particle Composition)

A Hausner ratio was measured as the fluidity of the particle composition. Specifically, 100 g of the particle composition of each of Examples and Comparative Examples was put in a glass measuring cylinder of 200 ml, tapping was performed 200 times, a volume before the tapping was set to Vo, a volume after the tapping was set to Vf, and a value was obtained by dividing Vo by Vf.

### (Measurement of Particle Size Distribution of Particle Composition)

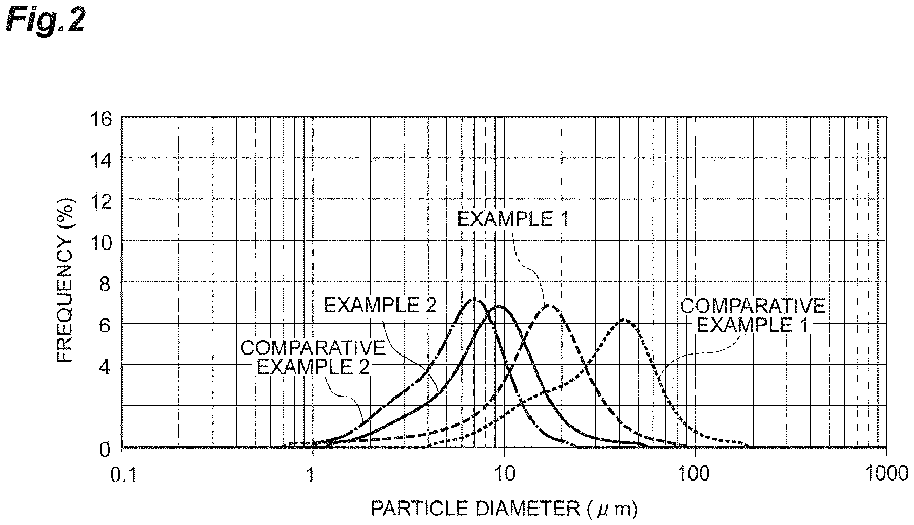

D10, D50, and D90 were obtained on the basis of a volume-based particle size distribution according to a laser diffraction method. The particle size distribution is shown in FIG. 2. Note that, a particle size of the particle composition is measured in a large amount of water, and thus, the water-absorbing polymer is widely dispersed in water, and does not become a measurement target. The particle size distribution of the particle composition of each of Examples and Comparative Examples is shown in FIG. 2.

### (Molding of Small Cylindrical Column in 3D Printer)

Each particle composition was introduced into a 3D printer (Projet (Registered Trademark) 460Plus, manufactured by 3D Systems Corporation), and a cylindrical columnar molded body having a diameter of 5.0 mm × a height of 10 mm was prepared by using an authentic ink for a Projet 460Plus 3D printer (Visijet PXL Clear, manufactured by 3D Systems Corporation). The ink contains water as a main component.

### (Measurement of Strength of Molded Body)

A compressive strength of the molded body was measured by a compressive strength test. In the measurement, a texture analyzer TA.XTPlus, manufactured by STABLE MICRO SYSTEMS LIMITED, was used. When a compression load is applied to a sample molded into the shape of a cylindrical column in a height direction, the compressive strength test is a value obtained by dividing a maximum load that the sample is capable of withstand by a sectional area perpendicular to a loading direction of the sample before the test. The molded body is largely broken into two or more pieces or is broken into a plurality of small pieces or a powder, in accordance with the compression load, and thus, the compression load becomes in a no-load state or the load considerably decreases. From the maximum load at this time, the compressive strength is obtained.

### (Molding of Complicated Shape in 3D Printer)

Each particle composition was introduced into a 3D printer (Projet (Registered Trademark) 460Plus, manufactured by 3D Systems Corporation), and a molded body in the shape of the tower of Pisa having a total length of approximately 13 cm was prepared by using an authentic ink for a Projet 460Plus 3D printer (Visijet PXL Clear, manufactured by 3D Systems Corporation). In addition, a small window in the shape of a slit having a width of 0.5 mm and a length of 10 mm was molded in a plate having a thickness of 5 mm.

Results are shown in Table 1. It is known that the fluidity of the powder becomes more excellent as the Hausner ratio becomes smaller. Examples 1 and 2 had the fluidity of greater than or equal to that of Comparative Example 2.

In Examples 1 and 2, the molding of a small cylindrical column can be performed. A compressive strength of a small cylindrical columnar molded body in Example 1 was 35.3 kPa. In addition, a compressive strength of a sinterd body obtained by retaining the molded body at 1500°C for 5 hours to sinter increased to 172 kPa. A volume contraction rate before and after the sintering was 25.8%. The alumina-based particles were completely subjected to phase transition to α-alumina by powder X-ray diffraction measurement of a sintered body, and an alumina sintered body having a three-dimensional shape was obtained in Examples 1 and 2. In Example 1, it was also possible to obtain a molded body having a complicated shape.

In contrast, in Comparative Example 1 and Comparative Example 2, the molding of a small cylindrical column was also difficult.

**[Table 1]**

| Table 1 | Composition of particle composition (parts by mass) | | Jet milling | Particle diameter (µm) | | | Hausner ratio | Molding of small cylindrical column | Molding of complicated shape |
|---|---|---|---|---|---|---|---|---|---|
| | Hydraulic alumina particles | Water-absorbing polymer | | D10 | D50 | D90 | | | |
| Example 1 | 70 | 30 | Present | 5.4 | 15.3 | 29.6 | 1.37 | Available | Available |
| Example 2 | 90 | 10 | Present | 3.4 | 8.3 | 15.8 | 1.37 | Available | Unavailable |
| Comparative Example 1 | 100 | - | Absent | 11.2 | 32.8 | 64.0 | 1.15 | Unavailable | Unavailable |
| Comparative Example 2 | 100 | - | Present | 2.4 | 5.8 | 10.2 | 1.41 | Unavailable | Unavailable |

## Claims

1. A particle composition, containing:
hydraulic alumina particles; and
a water-absorbing polymer.

2. The particle composition according to claim 1,
wherein a content of the hydraulic alumina particles is 60 mass% or more.

3. The particle composition according to claim 1 or 2,
wherein a content of the water-absorbing polymer is from 1 mass% to 40 mass%.

4. The particle composition according to any one of claims 1 to 3,
wherein at least a part of the water-absorbing polymer covers at least a part of a surface of the hydraulic alumina particles.

5. The particle composition according to any one of claims 1 to 4,
wherein the particle composition is for additive fabrication.
